# EUROPÄISCHE PATENTSCHRIFT

(11) **EP 1 645 178 B1**
(45) Veröffentlichungstag und Bekanntmachung des Hinweises auf die Patenterteilung: **02.12.2009**
(21) Anmeldenummer: 05014910.3
(22) Anmeldetag: 09.07.2005
(51) Int. Cl.: A01D 43/073, A01D 43/08, A01B 69/00

(54) **Überladeassistenzsystem**
Transfer assistance system
Système d'assistance pour le transfert

(30) Priorität: 06.10.2004 DE 102004048885; 27.10.2004 DE 102004052298
(43) Veröffentlichungstag der Anmeldung: 12.04.2006
(73) Patentinhaber: CLAAS Selbstfahrende Erntemaschinen GmbH, 33428 Harsewinkel (DE)
(72) Erfinder: Huster, Jochen, 33330 Gütersloh (DE); Hartmann, Ralf, 49324 Melle (DE); Diekhans, Norbert, Dr., 33335 Gütersloh (DE)

(56) Entgegenhaltungen:
- EP-A- 1 219 153
- EP-A- 1 454 520
- US-A- 4 529 348
- US-A- 5 575 316
- US-A1- 2004 116 169

## Beschreibung

Die Erfindung betrifft ein Überladeassistenzsystem zur Steuerung des aus einer Überladevorrichtung austretenden Erntegutstrahls einer landwirtschaftlichen Erntemaschine gemäß dem Oberbegriff des Anspruchs 1.

Selbstfahrende Erntemaschinen wie beispielsweise Feldhäcksler oder Mähdrescher weisen üblicherweise eine Überladeeinrichtung auf, mit der das geerntete Erntegut auf ein Transportfahrzeug oder ein Aufnahmebehältnis übergeben wird. Bei einem Feldhäcksler beispielsweise wird das Erntegut während der gesamten Erntefahrt permanent über der Überladevorrichtung an ein nebenher fahrendes Transportfahrzeug übergeben. Hierzu muss das Transportfahrzeug parallel zu dem Feldhäcksler oder neben dem Feldhäcksler her fahren. Der Fahrer des Feldhäckslers hat dabei stets die Position des Transportfahrzeuges zu dem Feldhäcksler zu kontrollieren, um eine exakte und verlustfreie Erntegutübergabe zu gewährleisten. Bei Abweichungen der Positionen des Feldhäckslers zu dem Transportfahrzeug muss der Fahrer des Feldhäckslers eine händische Korrektur der Erntegutübergabe durch Verstellung der Überladevorrichtungsposition oder durch Verstellung der am Ende der Überladevorrichtung angeordneten Überladeklappe vornehmen.

Aus der EP 1 219 153 ist ein Überladeassistenzsystem bekannt geworden, bei dem die Position der Überladeeinrichtung in Abhängigkeit von GPS-basierten Positionsdaten ermittelt wird.

Eine derartige Vorrichtung hat vor allem den Nachteil, dass der Auftreffpunkt des Gutstrahls auf dem Überladefahrzeug nicht präzise gesteuert werden kann.

In analoger Weise offenbart die US 4 529 348 ein Assistenzsystem, bei dem die Position der Überladeeinrichtung an die Stellung der Zugdeichsel des Überladefahrzeugs gekoppelt ist. Auch hier ergibt sich der Nachteil, dass der Auftreffpunkt des Gutstrahls auf dem Überladefahrzeug nicht präzise gesteuert werden kann,

Die EP 1 454 520 A1 offenbart eine Vorrichtung zur Steuerung der Überladeeinrichtung an einer landwirtschaftlichen Erntemaschine, die zur besseren Übergabe des Ernteguts an ein Transportfahrzeug die Verstellung der Position der Überladeeinrichtung in Abhängigkeit von der Position eines ersten Aktors zu der Position eines zweiten Aktors, wobei die Stellung der Aktoren die Stellung der Überladevorrichtung bestimmt, vornimmt.

Auf diese Weise wird erreicht, dass sich die Positionen der Aktoren zueinander selbsttätig anpassen, so dass der Fahrer des Feldhäckslers den zweiten Aktor nicht manuell zu verstellen braucht, wenn der erste Aktor zur Anpassung einer geänderten Situation verstellt wird, da die Verstellung des zweiten Aktors selbsttätig durch die Steuerung vorgenommen wird. Hierdurch soll eine den Fahrer entlastende Erntegutübergabe erreicht werden.

Nachteilig an dieser Ausführung der Steuerung der Überladevorrichtung ist, dass der Fahrer der landwirtschaftlichen Erntemaschine weiterhin die Lenkung der Überladeeinrichtung und eine Abstimmung zu dem nebenher- oder hinterherfahrenden Transportfahrzeug vornehmen muss, damit die Erntegutübergabe insgesamt verlustfrei erfolgt. Dass heißt, verschwenkt der Fahrer die Erntegutüberladeeinrichtung zu stark oder in einen, in Bezug auf das Transportfahrzeug, ungünstigen Winkel, wird weiterhin Erntegut an das Transportfahrzeug vorbei gefördert und bleibt als Verlust auf dem Feld liegen.

Es ist daher Aufgabe der Erfindung die Nachteile des zitierten Standes der Technik zu vermeiden und dem Fahrer der landwirtschaftlichen Erntemaschine einen einfachen und verlustfreien Überladevorgang zu ermöglichen.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln.

Indem das Überladeassistenzsystem eine Relativpositionsermittlung der Erntemaschine zu der Transportvorrichtung, eine Erntegutaustrittsstrahlsteuerung und ein Fahrleitsystem umfasst und wobei im Bereich der Transportvorrichtung ein Auftreffpunkt des Emtegutstrahls durch die Stellung der Überladeeinrichtung und durch die Stellung der Überladeklappe definiert wird und wobei die Stellung der Überladevorrichtung und die Stellung der Überladeklappe in einem mathematischen Modell durch Vektoren definiert wird, wird der Fahrer der landwirtschaftlichen Erntemaschine während der gesamten Erntefahrt von der permanenten Überwachung des Überladevorgangs erheblich entlastet. Außerdem wird eine genaue und verlustarme Übergabe des Enteguts an die Transportvorrichtung gewährleistet.

Dadurch, dass die Relativpositionsermittlung zwischen einer landwirtschaftlichen Erntemaschine und zumindest einer Transportvorrichtung erfolgt, kann der für eine verlustfreie Erntegutübergabe zu überwindende Abstand zwischen der Erntemaschine und der Transportvorrichtung genau bestimmt werden.

Indem die Erntegutaustrittssteuerung die aufeinander abgestimmte Steuerung der Stellung der Überladevorrichtung und der Stellung der Überladeklappe umfasst, erfolgt eine genaue Koordination zwischen der Positionsveränderung der Überladevorrichtung und der Positionsveränderung der Überladeklappe.

Durch die Definition der Stellung der Überladevorrichtung und der Stellung der Überladeklappe durch unterschiedliche Vektoren kann der genaue Auftreffpunkt des Erntegutes bestimmt werden, so dass der Auftreffpunkt stets optimal innerhalb der Transportvorrichtung liegt.

In besonders vorteilhafter Weise wird der Auftreffpunkt des Erntegutes entlang einer definierten Geometrie geführt. Die Führung entlang einer definierten Geometrie ermöglicht eine sichere und verlustfreie Übergabe des Erntegutes an die Transportvorrichtung. Insbesondere wird der Fahrer der landwirtschaftlichen Erntemaschine durch diese Art der Auftreffpunktsteuerung erheblich entlastet, da er den Erntegutübergabeprozess nicht permanent überwachen muss und sich damit auf das Abernten des auf dem Feld stehenden Ernteguts konzentrieren kann.

Insbesondere die Anordnung des Auftreffpunktes in einem virtuellen Raster gewährleistet eine genaue Erntegutübergabe innerhalb dieses Rasters.

Sollten sich die Erntebedingungen ändern, beispielsweise durch die Verwendung unterschiedlich großer Transportvorrichtungen, kann jederzeit das Raster diesen geänderten Bedingungen angepasst werden, indem die Größe und Lage des virtuellen Rasters verändert wird.

Durch die Unterteilung des virtuellen Rasters in ihrer Größe nach änderbaren virtuellen Feldern, wird eine besonders genaue Führung des Auftreffpunktes des Erntegutes innerhalb der in dem Raster liegenden Felder erreicht.

Diese genaue Führung des Auftreffpunktes innerhalb des virtuellen Rasters und der virtuellen Fenster wird auf einfache Weise über den Tastendruck eines allgemein bekannten Steuerhebels für die Überladevorrichtung erreicht, so dass in Abhängigkeit von dem Tastendruck oder der Anzahl mehrerer Tastendrücke ein bestimmtes virtuelles Fenster unmittelbar angesteuert wird. Das gleiche Prinzip der Ansteuerbarkeit lässt sich auf das gesamte virtuelle Raster übertragen.

Eine besonders gleichmäßige Befüllung der Transportvorrichtung wird dadurch erreicht, indem der Auftreffpunkt auf einer Geraden oder auf einer Kurvenbahn liegt.

Darüber hinaus wird eine gleichmäßige Befüllung der Transportvorrichtung gewährleistet, indem die Transportvorrichtung durch die Veränderung ihrer Position die Verstellung des Auftreffpunktes organisiert.

Eine besondere Entlastung erfährt der Fahrer der Erntemaschine, wenn die Überladevorrichtung automatisch verschwenkt. Alternativ hierzu bleibt es dem Fahrer der Erntemaschine belassen jederzeit manuell in die Steuerung der Überladevorrichtung korrigierend einzugreifen.

Weitere vorteilhafte Ausgestaltungen sind Gegenstand weiterer Unteransprüche und werden nachfolgend anhand von Zeichnungen näher erläutert.

### Es zeigen:

- Figur 1:: eine Draufsicht auf einen Feldhäcksler mit unterschiedlichen neben- und hinterher fahrenden Schleppern mit adaptierter Transportvorrichtung
- Figur 2:: ein Fließdiagramm des erfindungsgemäßen Überladeassistenzsystems gemäß Figur 1
- Figur 3:: eine Ansicht auf eine als Feldhäcksler ausgeführte landwirtschaftliche Erntemaschine mit neben her fahrendem Schlepper gemäß Figur 1

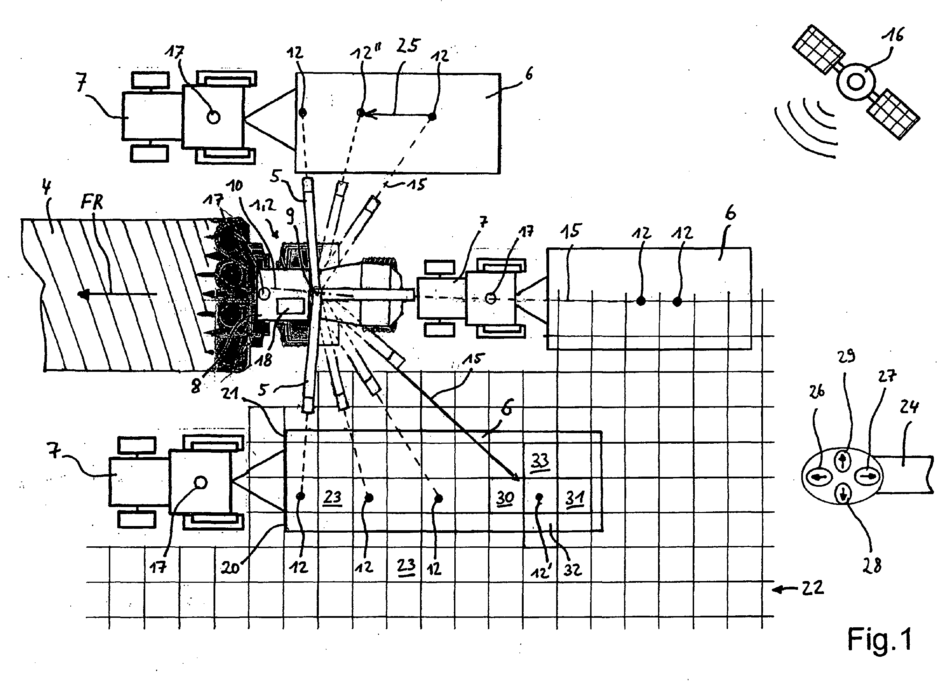

In der Figur 1 wird eine als selbstfahrender Feldhäcksler 1 ausgeführte landwirtschaftliche Erntemaschine 2 in Draufsicht dargestellt. Frontseitig ist dem Feldhäcksler 1 ein Vorsatzgerät 3, vorliegend ein Maisgebiss 3', zugeordnet, welches das Erntegut 4 schneidet, aufnimmt und einer nicht abgebildeten Häckselvorrichtung zuführt.
Das zerkleinerte Erntegut 4 wird dann über eine Überladevorrichtung 5 an eine Transportvorrichtung 6 übergeben. Die Transportvorrichtung 6 ist an einem Schlepper 7 adaptiert, der im Idealfall parallel neben dem Feldhäcksler 1 oder unmittelbar hinter dem Schlepper 7 fährt. In an sich bekannter Weise ist die hinter der Fahrerkabine 8 angeordnete Überladevorrichtung 5 um eine senkrechte Drehachse 9 und zur Veränderung der Höheneinstellung um eine horizontale Achse 10 verschwenkbar. Darüber hinaus kann die Weite des ausgeworfenen Erntegutstrahl durch eine auf- und absenkbare Überladeklappe 11 gesteuert werden. Wird die Überladeklappe 11 aufwärtig verschwenkt, wird der Erntegutstrahl weiter, wird die Überladeklappe abwärtig verschwenkt, wird der Erntegutstrahl weniger weit geworfen.

Während der Erntefahrt stellt sich für den Fahrer einer landwirtschaftlichen Erntemaschine 2 das Problem das Erntegut 4 in Fahrtrichtung der sich bewegenden Erntemaschine 2 gleichmäßig abzuernten, ohne dass ein Restbestand auf dem Feld zurückgelassen wird und gleichzeitig eine sichere und verlustarme Überladung des bearbeiteten Ernteguts 4 an die Transportvorrichtung 6 zu gewährleisten. In Bezug auf die Übergabe des Ernteguts 4 an die Transportvorrichtung 6 muss der Fahrer der Erntemaschine 2 den Überladebereich permanent beobachten, um den Auftreffpunkt 12 des Erntegutstrahls in der Transportvorrichtung 6 genau zu bestimmen. Dies führt für den Fahrer neben der exakten Spurführung während des Erntevorganges zu einer zusätzlichen Belastung.

Erfindungsgemäß entlastet das Überladeassistenzsystem den Fahrer von dieser permanenten Kontrolle, indem das Überladeassistenzsystem eine Relativpositionsermittlung, eine Erntegutaustrittsstrahlssteuerung und ein Fahrerleitsystem umfasst umfasst und wobei im Bereich der Transportvorrichtung ein Auftreffpunkt des Emtegutstrahls durch die Stellung der Überladeeinrichtung und durch die Stellung der Überladeklappe definiert wird und wobei die Stellung der Überladevorrichtung und die Stellung der Überladeklappe in einem mathematischen Modell durch Vektoren definiert wird. Auf diese Weise wird der Auftreffpunkt 12 des Erntegutstrahls optimal zu der Transportvorrichtung 6 ausgerichtet, so dass sich der Fahrer besser auf den Ernteprozess konzentrieren kann.
Die Ermittlung der Relativposition der als Feldhäcksler 1 ausgeführten Erntemaschine 2 zu der Position der von dem Schlepper 7 gezogenen Transportvorrichtung 6 erfolgt über ein allgemein bekanntes Global Positioning System GPS. Mittels GPS Satelliten 16 werden in gleichen Zeitabständen Identifikations-, Positions- und Zeitsignale gesendet, die von einer am Schlepperfahrzeug 7 angeordneten GPS Antenne 17 sowie einer an dem Feldhäcksler 1 angeordneten GPS Antenne 17 empfangen werden. Durch den Empfang und der Entsendung der GPS Signale wird die Relativposition des Schleppers 7 sowie der an dem Schlepper 7 adaptierten Transportvorrichtung 6 zu dem Feldhäcksler 1 durch eine Verrechnung ermittelt. Die GPS Daten sowie die Daten über die aktuelle Position der Überladevorrichtung 5 und der Überladeklappe 11 werden an ein nicht abgebildetes Modul übergeben, in dem die Berechnung des Auftreffpunktes 12 erfolgt.
In einem allgemeinen mathematischen Modell wird anhand der Relativpositionsermittlung der optimale und gewünschte Auftreffpunkt 12 innerhalb der Transportvorrichtung 6 berechnet. Das Ergebnis dieser Berechnung fließt in die Steuerung der Überladeklappe 11 und der Überladevorrichtung 5 ein, durch welche die Richtung des Erntegutstrahls 15 und damit der berechnete Auftreffpunkt 12 des bearbeiteten Erntegutes 4 innerhalb der Transportvorrichtung 6 angesteuert wird.

Der Fahrer des Feldhäcklsers 1 wird bei der Erntefahrt insbesondere dadurch entlastet, indem der Auftreffpunkt 12 entlang einer definierten Geometrie geführt wird. Diese definierte Geometrie kann beispielsweise in Gestalt eines virtuellen Rasters 22 umgesetzt werden, welches einen Teilbereich oder den gesamten Bereich des Feldhäckslers 1 umgibt.
Die Lage und Größe des virtuellen Rasters 22 ist veränderbar und kann vorteilhaft auf die Höhe der Oberkante der Seitenwand 21 der Transportvorrichtung 6 gelegt werden. Hierdurch wird gewährleistet, dass der Erntegutstrahl 15 nicht zu niedrig geführt wird und damit gegen die Seitenwand 21 der Transportvorrichtung 6 prallt und als Erntegutverlust auf dem Boden zurück bleibt.

In vorteilhafter Weise ist das virtuelle Raster 22 in mehrere virtuelle Felder 23 unterteilt. Durch die Ansteuerbarkeit des virtuellen Rasters 22, beziehungsweise der virtuellen Felder 23, hat der Fahrer des Feldhäckslers 1 die Möglichkeit den Erntegutstrahl 15 genau innerhalb dieses Rasters 22 und der Felder 23 zu führen.
Über einen innerhalb der Fahrerkabine 8 angeordneten Multifunktionsgriff 24 kann der Fahrer des Feldhäckslers 1 die Position der Überladevorrichtung 5 und der Überladeklappe 11 und somit die Richtung des Erntegutstrahls 15 ändern. Demnach sind die das virtuelle Raster 22 und die darin eingeordneten virtuellen Felder 23 ansteuerbar. Die Steuerung erfolgt in Abhängigkeit von der Betätigung des Multifunktionsgriffes 24, dass heißt in Abhängigkeit von dem Tastendruck auf eines der Betätigungselemente 26, 27, 28, 29 des Multifunktionsgriffes 24. Hierbei sind die auf dem Multifunktionsgriff 24 durch die Betätigungselemente 26, 27, 28, 29 dargestellten und möglichen Bewegungsrichtungen der Übergabevorrichtung 5 der Ansteuerung einem bestimmten virtuellen Feldes 23 zuzuordnen. Im zugrundeliegenden Ausführungsbeispiel bedeutet dies, dass der Auftreffpunkt 12' in dieser Nullstellung unverändert bleibt.
Durch Betätigung des Betätigungselementes 26 wird der Auftreffpunkt 12' in Fahrtrichtung FR um ein virtuelles Feld 23 auf das virtuelle Feld 30 bewegt. Bei betätigen des Betätigungselementes 27 wird der Auftreffpunkt 12*'*, ausgehend von der zuvor genannten Nullstellung, entgegen der Fahrtrichtung FR um ein virtuelles Feld 23 auf das virtuelle Feld 31 bewegt. Wird von dem Fahrer des Feldhäckslers 1 das Betätigungselement 28 gedrückt, verschiebt sich der Auftreffpunkt 12', ausgehend von der Nullstellung, um ein virtuelles Feld 23 linksseitig auf das virtuelle Feld 32 und bei Betätigung des Betätigungselements 29 um ein virtuelles Feld 23 rechtsseitig auf das virtuelle Feld 33. Es liegt im Rahmen der Erfindung durch die Anzahl der Tastenbetätigungen auf dem entsprechenden Betätigungselement 26, 27, 28 oder 29 mehrere virtuelle Felder 23 nacheinander zu überfahren, wodurch der Fahrer des Feldhäckslers 1 eine schnelle und exakte Verstellung der Überladevorrichtung 5 und eine genaue Befüllung des Transportfahrzeuges 6 erreicht.
Während des Erntevorgangs erfolgt die Verschiebung des Auftreffpunktes 12' ausschließlich innerhalb der Wandungen 20, 21 der Transportvorrichtung 6, damit ein optimaler und verlustfreier Überladevorgang des bearbeiteten Ernteguts 4 in die Transportvorrichtung 6 hinein gewährleistet wird.

Die oben benannte Steuerung eines Auftreffpunktes 12 und die damit verbundene Erntegutübergabe ist auf jede Position des Transportfahrzeuges 6 in Bezug auf die landwirtschaftliche Erntemaschine 2 entsprechend anwendbar.

Denkbar ist anstelle der Verwendung und der Verschiebung des Auftreffpunktes 12 innerhalb eines virtuellen Rasters 22 oder virtueller Felder 23 die Verschiebung des Auftreffpunktes 12 auf den Auftreffpunkt 12 " entlang einer Geraden zu führen. Hierbei wird die Verlagerung des Auftreffpunktes 12 auf den Auftreffpunkt 12 " durch die Betätigung des Betätigungselementes 26 durchgeführt. Die Bewegungsstrecke 25 auf der Geraden wird dabei durch die Dauer der Betätigung des Betätigungselementes 26 bestimmt. In Bezug auf die übrigen Betätigungselemente 27, 28, 29 gilt das zuvor Gesagte.

Indem die virtuellen Felder 23 ihrer Größe nach veränderbar sind, kann der Fahrer des Feldhäckslers festlegen, ob er eine schnelle Verstellung durch große Felder 23 oder eine langsame und exakte Verstellung durch kleine Felder 23 haben will.

Insgesamt orientiert sich die Übergabe des bearbeiteten Ernteguts 4 an der Lage und Größe des virtuellen Rasters 22 sowie an der Größe und Lage der Felder 23, so dass der Schwenkbereich der Überladevorrichtung 5 durch die das virtuelle Raster und den virtuellen Felder 23 bestimmt wird.

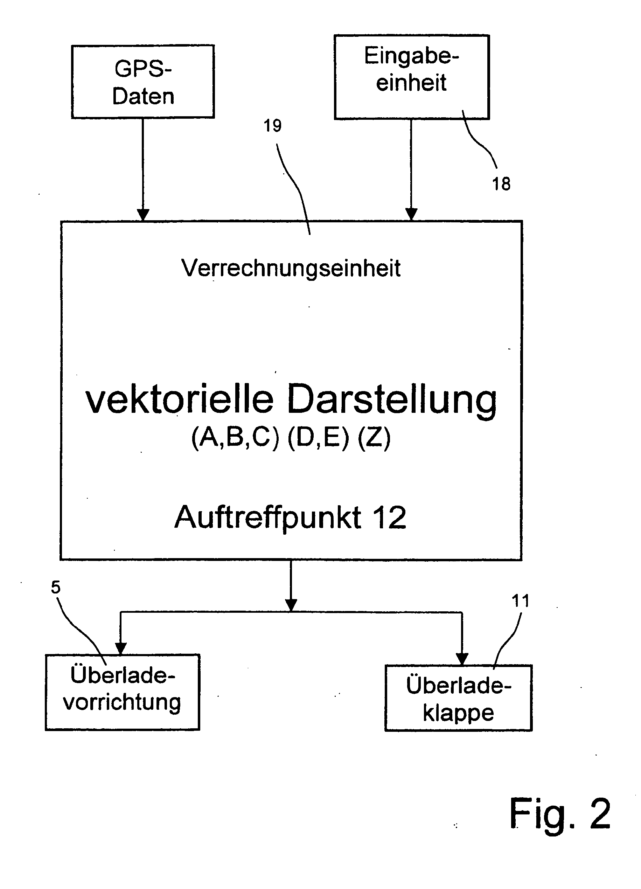

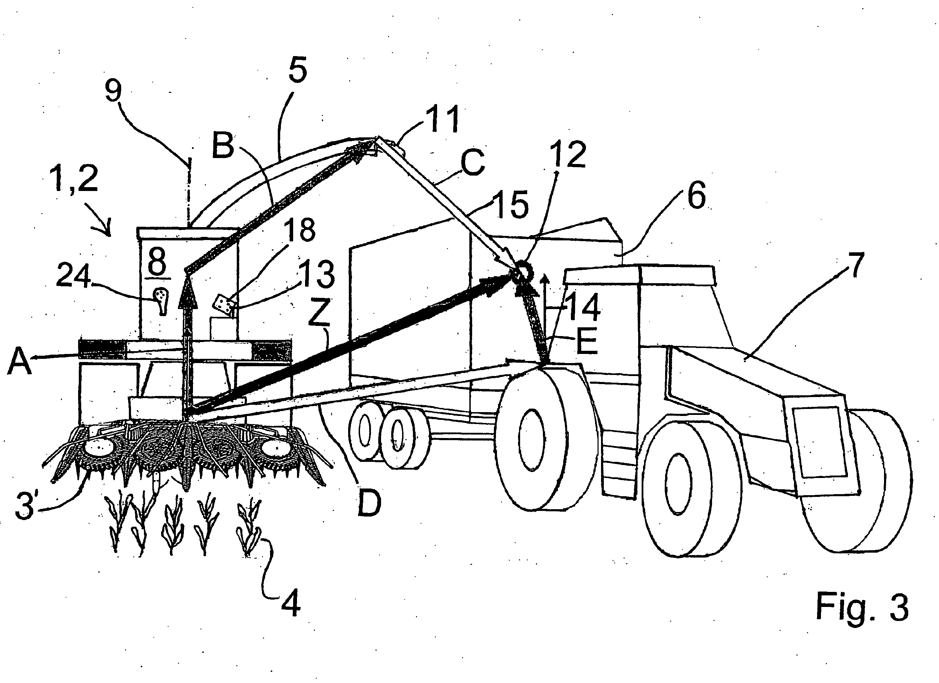

In der Figur 2 ist ein Fließdiagramm des Überladeassistenzsystems dargestellt. Wie zuvor bereits in Figur 1 beschrieben, werden die GPS Signale über die Relativposition des Feldhäckslers 1 zu dem Schlepper 7 und der daran adaptierten Transportvorrichtung 6 an eine Verrechnungseinheit 19, die als Modul ausgeführt sein kann, übermittelt.
In eine Eingabeeinheit 18 kann der Fahrer der Erntemaschine 2 Grenzwerte eingeben, die Einfluss auf eine verlustfreie Erntegutübergabe an die Transportvorrichtung 6 haben. So stellen beispielsweise das Kabinendach der Erntemaschine 2 oder die Höhe der Wandungen 20, 21 der Transportvorrichtung 6 wesentliche Faktoren dar, die die Erntegutübergabe beeinflussen. Beispielsweise schränkt die Größe und die Anordnung des Kabinendachs auf einem selbstfahrenden Feldhäcksler 1 die Verschwenkbarkeit der Überladevorrichtung 5 in dem vorderen Bereich des Feldhäckslers 1 ein, da bei einem zu starken Verschwenken der Überladevorrichtung 5 in Fahrtrichtung FR die Überladevorrichtung 5 gegen das Kabinendach stoßen würde. Hingegen bestimmt die Höhe der Wandungen 20, 21 der Transportvorrichtung 6 die Mindesthöhe, in der der Erntegutstrahl an die Transportvorrichtung 6 übergeben werden muss. Zu beachten ist, dass die hier genannten Grenzwerte nicht abschließend, sondern beliebig erweiterbar sind.
Die eingegebenen Grenzwerte werden dann an die Verrechnungseinheit 19 übergeben und fließen neben den GPS Signalen in die Berechnung des Auftreffpunktes 12 ein. Der Auftreffpunkt 12 wird in Abhängigkeit von den empfangenen GPS-und Grenzwertsignalen anhand eines mathematischen Modells, welches sich aus nachfolgend in der Figur 3 dargestellten Vektoren A, B, C, D, E durch die Summe der Vektoren A, B, C oder durch die Summe der Vektoren D und E ergibt, bestimmt.
Aufgrund des Ergebnisses dieser Berechnung wird ein Signal an die Überladevorrichtung 5 und an die Überladeklappe 11 generiert.
In Abhängigkeit von diesem generierten Signal erfolgt die Einstellung der Überladevorrichtung 5 sowie der Überladeklappe 11, so dass die Stellung der Überladevorrichtung 5 und die Stellung der Überladeklappe 5 den Auftreffpunkt 12 des bearbeiteten Ernteguts 4 innerhalb der Transportvorrichtung 6 definiert und eine verlustfreie und den Fahrer der Erntemaschine 2 entlastende Erntegutübergabe gewährleistet ist.

In der Figur 3 ist zur näheren Verdeutlichung der Erfindung ein Feldhäcksler 1 und ein neben dem Feldhäcksler 1 fahrender Schlepper 7 mit adaptierter Transportvorrichtung 6 abgebildet.
Die Relativpositionsermittlung zwischen dem Feldhäcksler 1 und der Transportvorrichtung 6, als eine Führungsgröße zur Bestimmung des Auftreffpunktes 12 des Erntegutes 4 innerhalb der Transportvorrichtung 6, wird mittels eines an sich bekannten Satellitennavigationssystems GPS zur Feststellung der Positionen des Feldhäckslers 1 und der Transportvorrichtung 6, sowie einem Zielpunktvektor (Z) des Feldhäckslers 1 zu einem Bezugspunkt, dem Auftreffpunkt 12, auf der Transporteinheit 6 durchgeführt.

Die Erntegutaustrittssteuerung erfolgt in an sich bekannter Weise durch die Verstellung der Überladevorrichtung 5 und der Verstellung der Überladeklappe 11, wobei die Überladevorrichtung 5 beispielsweise über einen nicht abgebildeten Drehkranz in der horizontalen Achse 10 und über eine gleichfalls nicht abgebildete Kolbenzylindereinheit in der vertikalen Achse 9 veränderbar ist. Über die Verstellung der Überladeklappe 11 kann die Wurfweite des Ernteguts 4 reguliert werden. Hierbei ist die auf- oder abwärtige Bewegung der Überladeklappe 11 an die horizontale und vertikale Bewegung der Überladevorrichtung 5 gekoppelt. Dass heißt, senkt sich die Überladevorrichtung 5 verschwenkt die Überladeklappe 5 aufwärtig in einem bestimmten Maß, so dass der Überladepunkt 12 stets auf einer geraden Bewegungsstrecke 25 liegt.

Das Fahrleitsystem kann über eine optische Anzeigeeinheit 13 innerhalb der Fahrerkabine 8 dem Fahrer des Feldhäckslers 1 die optimale Relativposition entsprechend des aktuellen Überladevorganges zu dem Transportfahrzeug 6 anzeigen. Die Anzeige der aktuellen Relativposition ist insbesondere in den kritischen Kurvenfahrten wichtig, da in diesen Bereichen eine verlustfreie Überladung des Erntegutes 4, wegen des durch die Fahrerkabine 8 nach vorne hin eingeschränkten Schwenkbereiches der Überladevorrichtung 5, teilweise nicht möglich ist.

Zur optimalen und störungsfreien Überladung des bearbeiteten Erntegutes 4 an die Transportvorrichtung 6 wird die Stellung der Überladevorrichtung 5 und die Stellung der Überladeklappe 11 in einem mathematischen Modell durch unterschiedliche Vektoren A, B, C, D, E definiert.
Die Definition der Vektoren A, B, C, D, E dient dazu einen Zielpunktvektor Z zu ermitteln. Der Zielpunktvektor Z legt einen optimalen Auftreffpunkt 12 des bearbeiteten Erntegutes im Raum der Transportvorrichtung 6 fest.
Der Zielpunktvektor Z kann auf unterschiedlicher Weise ermittelt werden. Zum einen wird ein Vertikalvektor A, ein Überladevorrichtungsvektor B und ein Erntegutstrahlvektor C miteinander verrechnet, wobei der Vertikalvektor A parallel zu der vertikalen Achse 14 der Transportvorrichtung 6 verläuft. Der Überladevorrichtungsvektor B wird durch die horizontale und vertikale Position der Überladevorrichtung 5 und der Erntegutstrahlvektor C durch die Wurfrichtung des aus der Überladevorrichtung 5 austretenden und bearbeiteten Ernteguts 4 bestimmt. Die Summe dieser drei Vektorgrößen A, B, C ergibt den Zielpunktvektor Z. Durch die Bestimmung des Zielpunktvektors Z wird der Auftreffpunkt 12 des Erntegutstrahls 15 im Raum der Transportvorrichtung 6 definiert.
Alternativ zu der Berechnung des Auftreffpunktes 12 des Erntegutstrahls 15 über die Vektoren A, B, C kann der Auftreffpunkt 15 auch über den Relativpositionsvektor D und dem Beladungspunktvektor E ermittelt werden. Der Relativpositionsvektor D beschreibt die relative Position des Feldhäckslers 1 zu der Transportvorrichtung 6. Der Beladungspunktvektor E beschreibt den Auftreffpunkt des Erntegutes 6 innerhalb der Transportvorrichtung 6. Die Summe der Vektoren D und E ergibt wiederum den Zielpunktvektor Z, so dass der Auftreffpunkt 12 definiert werden kann.

Da sich während der Erntefahrt die Erntegutmasse unterschiedlich in der Transportvorrichtung 6 verteilt und die bearbeitete Erntegutmenge unterschiedlich hoch ist, ist es vorteilhaft den Auftreffpunkt 12 einstellbar zu machen. So kann der Fahrer der Erntemaschine 2 den Erntegutstrahl durch Verlegung des Auftreffpunktes 12 exakt steuern und eine genaue Befüllung des Transportfahrzeuges vornehmen.

Da sich die Position der Erntemaschine 2 zu der Transportvorrichtung 6 regelmäßig ändert, hervorgerufen beispielsweise durch Lenkungenauigkeiten oder unterschiedliche Fahrtgeschwindigkeiten der Erntemaschine 2 und des Schleppers 7, ist es vorteilhaft den Zielpunktvektor Z variabel auszuführen. Dies bedeutet, dass eine Änderung einer Vektorrechnungsgröße A, B, C, D oder E keinen Einfluss auf die Genauigkeit der Erntegutübergabe hat, da die Änderung der Vektorgrößen unmittelbar in die Berechnung des Zielpunktvektors Z einfließt und damit eine neue Festlegung und Aktualisierung des Auftreffpunktes 12 des Erntegutstrahls 15 erfolgt, so dass das bearbeitete Erntegut weiterhin verlustfrei überladen wird.
In vorteilhafter Weise liegt der Auftreffpunkt 12 des Erntegutstrahls 15 auf einer Geraden, Fig. 1. Durch die Lage des Auftreffpunktes 12 auf einer Geraden, die im Idealfall in der Mitte der Transportvorrichtung 6 gelegt ist, wird das Erntegut 4 besonders gleichmäßig an die Transportvorrichtung 6 übergeben, damit sich der Schüttkegel des übergebenen Ernteguts 4 einheitlich in der Transportvorrichtung 6 ausbreiten kann.

Darüber hinaus liegt es im Rahmen der Erfindung den Auftreffpunkt 12 auf eine nicht näher dargestellten Kurvenbahn zu legen, so dass der Erntegutstrahl 15 beispielsweise in Längsrichtung der Transportvorrichtung 6 von der einen Innenwand 20 der Transportvorrichtung 6 zu der gegenüberliegenden Innenwand 21 der Transportvorrichtung 6 wandert. Hierdurch wird eine besonders exakte Befüllung der Transportvorrichtung 6 erreicht, da der Erntegutstrahl 15 die gesamte Breite und Länge der Transportvorrichtung 6 erfasst.
Schließlich besteht die Möglichkeit, dass die Transportvorrichtung 6 bzw. der die Transportvorrichtung 6 ziehende Schlepper 7 die Verstellung des Auftreffpunktes 12 organisiert. Bei diesem Ausführungsbeispiel wird die Position der Überladevorrichtung 5 konstant gehalten und die Position der Transportvorrichtung 6 variiert in Abhängigkeit von dem aktuellen Befüllgrad. Zur Unterstützung der Positionsanpassung zeigt ein Fahrerleitsystem dem Schlepperfahrer die Relativposition der Erntemaschine 2 zu der Transportvorrichtung 6 an, so dass der Fahrer durch einfache Lenkbewegung die Transportvorrichtung 6 optimal zur Überladevorrichtung 5 ausrichten kann.

Wie zuvor dargestellt obliegt es dem Fahrer des Feldhäckslers 1 die Überladevorrichtung 5 manuell zu steuern oder aber eine automatische Steuerung durchzuführen, die beispielsweise eine definierte Regelschleife durchläuft.

### Bezugszeichenliste:

- 1: Selbstfahrender Feldhäcksler
- 2: Erntemaschine
- 3: Vorsatzgerät
- 3': Maisgebiss
- 4: Erntegut
- 5: Überladevorrichtung
- 6: Transportvorrichtung
- 7: Schlepper
- 8: Fahrerkabine
- 9: vertikale Drehachse
- 10: horizontale Achse
- 11: Überladeklappe
- 12: Auftreffpunkt
- 13: Anzeigeeinheit
- 14: vertikale Achse
- 15: Erntegutstrahl
- 16: GPS Satellit
- 17: GPS Antenne
- 18: Eingabeeinrichtung
- 19: Verrechnungseinheit
- 20: Innenwand
- 21: Innenwand
- 22: virtuelles Raster
- 23: virtuelles Feld
- 24: Multfunktionsgriff
- A: Vertikalvektor
- B: Überladevorrichtungsvektor
- C: Erntegutstrahlvektor
- D: Relativpositionsvektor
- E: Beladungspunktvektor
- Z: Zielpunktvektor
- FR: Fahrtrichtung

- 25: Bewegungsstrecke
- 26: Betätigungselement
- 27: Betätigungselement
- 28: Betätigungselement
- 29: Betätigungselement
- 30: virtuelles Feld
- 31: virtuelles Feld
- 32: virtuelles Feld
- 33: virtuelles Feld
- 12': Auftreffpunkt
- 12": Auftreffpunkt

## Patentansprüche

1. Überladeassistenzsystem zur Steuerung des aus einer Überladevorrichtung (5) austretenden Erntegutstrahls (15) einer landwirtschaftlichen Erntemaschine (2), wobei der Überladevorrichtung (5) endseitig eine Überladeklappe (11) zugeordnet ist und wobei das Erntegut (4) an eine Transportvorrichtung (6) übergeben wird,
wobei
das Überladeassistenzsystem eine Relativpositionsermittlung, eine Erntegutaustrittsstrahlsteuerung und ein Fahrerleitsystem umfasst **dadurch gekennzeichnet, dass** im Bereich der Transportvorrichtung (6) ein Auftreffpunkt des Erntegutstrahls (15) durch die Stellung der Überladevorrichtung (5) und durch die Stellung der Überladeklappe (11) definiert wird und wobei die Stellung der Überladevorrichtung (5) und die Stellung der Überladeklappe (11) in einem mathematischen Modell durch Vektoren (A, B, C, D, E) definiert wird.

2. Überladeassistenzsystem zur Steuerung des aus einer Überladevorrichtung (5) austretenden Erntegutstrahls einer landwirtschaftlichen Erntemaschine (2) nach Anspruch 1,
**dadurch gekennzeichnet, dass**
die Relativpositionsermittlung zwischen der landwirtschaftlichen Erntemaschine (2) und zumindest einer Transportvorrichtung (6) erfolgt.

3. Überladeassistenzsystem zur Steuerung des aus einer Überladevorrichtung (5) austretenden Erntegutstrahls einer landwirtschaftlichen Erntemaschine (2) nach einem oder mehreren der vorangegangenen Ansprüche,
**dadurch gekennzeichnet, dass**
die Erntegutaustrlttssteuerung die aufeinander abgestimmte Steuerung der Stellung der Überladevorrichtung (5) und der Stellung der Überladeklappe (11) umfasst.

4. Überladeassistenzsystem zur Steuerung des aus einer Überladevorrichtung (5) austretenden Erntegutstrahls einer landwirtschaftlichen Erntemaschine (2) nach einem oder mehreren der vorangegangenen Ansprüche,
**dadurch gekennzeichnet, dass**
der Auftreffpunkt (12) des Erntegutstrahls (15) auf der Transportvorrichtung (6) durch einen Zielpunktvektor (Z) definiert wird.

5. Überladeassistenzsystem zur Steuerung des aus einer Überladevorrichtung (5) austretenden Erntegutstrahls einer landwirtschaftlichen Erntemaschine (2) nach Anspruch 4
**dadurch gekennzeichnet, dass**
der Zielpunktvektor (Z) sich durch die vektorielle Addition eines Vertikalvektors (A), eines Überladevorrichtungsvektors (B) und eines Erntegutstrahlvektors (C) zusammensetzt.

6. Überladeassistenzsystem zur Steuerung des aus einer Überladevorrichtung (5) austretenden Erntegutstrahls einer landwirtschaftlichen Erntemaschine (2) nach Anspruch 4 oder 5,
**dadurch gekennzeichnet, dass**
der Zielpunktvektor (Z) sich durch die vektorielle Addition eines Relativpositionsvektors (D) und eines Beladungspunktvektors (E) zusammensetzt.

7. Überladeassistenzsystem zur Steuerung des aus einer Überladevorrichtung (5) austretenden Erntegutstrahls einer landwirtschaftlichen Erntemaschine (2), nach einem oder mehrerer der vorhergehenden Ansprüche
**dadurch gekennzeichnet, dass**
der Auftreffpunkt (12) des Erntegutes (4) auf der Transportvorrichtung (6) entlang einer definierten Geometrie geführt wird.

8. Überladeassistenzsystem zur Steuerung des aus einer Überladevorrichtung (5) austretenden Erntegutstrahls einer landwirtschaftlichen Erntemaschine (2) nach einem oder mehreren der vorangegangenen Ansprüche,
**dadurch gekennzeichnet, dass**
der Auftreffpunkt (12) des Erntegutes (4) innerhalb eines virtuellen Rasters (22) angeordnet ist.

9. Überladeassistenzsystem zur Steuerung des aus einer Überladevorrichtung (5) austretenden Erntegutstrahls einer landwirtschaftlichen Erntemaschine (2) nach Anspruch 8,
**dadurch gekennzeichnet, dass**
die Lage und/oder die Größe des virtuellen Rasters (22) änderbar ist.

10. Überladeassistenzsystem zur Steuerung des aus einer Überladevorrichtung (5) austretenden Erntegutstrahls einer landwirtschaftlichen Erntemaschine (2) nach den Ansprüchen 8 und 9,
**dadurch gekennzeichnet, dass**
das virtuelle Raster (22) in mehrere virtuelle Felder (23) unterteilt ist.

11. Überladeassistenzsystem zur Steuerung des aus einer Überladevorrichtung (5) austretenden Erntegutstrahls einer landwirtschaftlichen Erntemaschine (2) nach Anspruch 10,
**dadurch gekennzeichnet, dass**
die Größe der virtuellen Felder (23) änderbar ist.

12. Überladeassistenzsystem zur Steuerung des aus einer Überladevorrichtung (5) austretenden Erntegutstrahls einer landwirtschaftlichen Erntemaschine (2) nach einem der Ansprüche 10 oder 11,
**dadurch gekennzeichnet, dass**
das die virtuellen Raster (22) und die virtuellen Felder (23) ansteuerbar sind.

13. Überladeassistenzsystem zur Steuerung des aus einer Überladevorrichtung (5) austretenden Erntegutstrahls einer landwirtschaftlichen Erntemaschine (2) nach einem der Ansprüche 10-12,
**dadurch gekennzeichnet, dass**
die Ansteuerung des Auftreffpunktes (12) innerhalb des virtuellen Rasters (22) und der virtuellen Felder (22) durch Tastendruck vorgenommen wird.

14. Überladeassistenzsystem zur Steuerung des aus einer Überladevorrichtung (5) austretenden Erntegutstrahls einer landwirtschaftlichen Erntemaschine (2) nach einem der Ansprüche 8-13,
**dadurch gekennzeichnet, dass**
die Überiadevorrichtung (5) in Abhängigkeit von der Lage und/oder der Größe des virtuellen Rasters (22) verschwenkt.

15. Überladeasslstenzsystem zur Steuerung des aus einer Überladevorrichtung (5) austretenden Erntegutstrahls einer landwirtschaftlichen Erntemaschine (2) nach Anspruch 14,
**dadurch gekennzeichnet, dass**
der Schwenkbereich der Überladevorrichtung (5) durch die virtuellen Felder (23) bestimmt wird.

16. Überladeassistenzsystem zur Steuerung des aus einer Überladevorrichtung (5) austretenden Erntegutstrahls einer landwirtschaftlichen Erntemaschine (2) nach Anspruch 4,
**dadurch gekennzeichnet, dass**
der Auftreffpunkt (12) einstellbar ist.

17. Überladeassistenzsystem zur Steuerung des aus einer Überladevorrichtung (5) austretenden Erntegutstrahls einer landwirtschaftlichen Erntemaschine (2) nach Anspruch 4,
**dadurch gekennzeichnet, dass**
der Zielpunktvektor (Z) variabel ist.

18. Überladeassistenzsystem zur Steuerung des aus einer Überladevorrichtung (5) austretenden Erntegutstrahls einer landwirtschaftlichen Erntemaschine (2) nach einem oder mehreren der vorangegangenen Ansprüche,
**dadurch gekennzeichnet, dass**
der Auftreffpunkt (12) auf einer Geraden oder auf einer Kurvenbahn liegt.

19. Überladeassistenzsystem zur Steuerung des aus einer Überladevorrichtung (5) austretenden Erntegutstrahls einer landwirtschaftlichen Erntemaschine (2) nach Anspruch 18
**dadurch gekennzeichnet, dass**
das die Transportvorrichtung (6) die Verstellung des Auftreffpunktes (12) organisiert.

20. Überladeassistenzsystem zur Steuerung des aus einer Überladevorrichtung (5) austretenden Erntegutstrahls einer landwirtschaftlichen Erntemaschine (2) nach einem oder mehreren der vorangegangenen Ansprüche,
**dadurch gekennzeichnet, dass** ein Fahrerleitsystem vorgesehen ist, welches das Fahrerleitsystem die Relativposition der landwirtschaftlichen Erntemaschine (2) zu der Transportvorrichtung (6) anzeigt.

21. Überladeassistenzsystem zur Steuerung des aus einer Überladevorrichtung (5) austretenden Erntegutstrahls einer landwirtschaftlichen Erntemaschine (2) nach einem oder mehreren der vorangegangenen Ansprüche,
**dadurch gekennzeichnet, dass**
die Überladevorrichtung (5) automatisch oder manuell verschwenkt.

22. Überladeassistenzsystem zur Steuerung des aus einer Überladevorrichtung (5) austretenden Erntegutstrahls einer landwirtschaftlichen Erntemaschine (2) nach einem oder mehreren der vorangegangenen Ansprüche,
**dadurch gekennzeichnet, dass**
das Überladeassistenzsystem die Signale zur Bestimmung der Relativposition der landwirtschaftlichen Erntemaschine (2) zu der Transportvorrichtung (6) durch ein GPS System sowie die Signale zur Bestimmung der Erntegutaustrittsstrahlsteuerung durch die Position der Überladevorrichtung (5) und der Überladeklappe (11) empfängt, verarbeitet und dem Fahrer der landwirtschaftlichen Erntemaschine (1) in einem Fahrleitsystem zur Anzeige bringt.

## Claims

1. A transloading assistance system for controlling the stream of crop material (15) of an agricultural harvester (2), that issues from a transloading apparatus (5), wherein a transloading flap (11) is associated at the end with the transloading apparatus (5) and wherein the crop material (4) is transferred to a transport apparatus (6), wherein the transloading assistance system includes relative position determination, a crop material discharge stream control and a driver guidance system, **characterised in that** in the region of the transport apparatus (6) an impingement point of the stream of crop material (15) is defined by the position of the transloading apparatus (5) and by the position of the transloading flap (11), and wherein the position of the transloading apparatus (5) and the position of the transloading flap (11) is defined in a mathematical model by vectors (A, B, C, D, E).

2. A transloading assistance system for controlling the stream of crop material of an agricultural harvester (2), that issues from a transloading apparatus (5), according to claim 1 **characterised in that** relative position determination is effected between the agricultural harvester (2) and at least one transport apparatus (6).

3. A transloading assistance system for controlling the stream of crop material of an agricultural harvester (2), that issues from a transloading apparatus (5), according to one or more of the preceding claims **characterised in that** the crop material discharge control includes mutually matched control of the position of the transloading apparatus (5) and the position of the transloading flap (11).

4. A transloading assistance system for controlling the stream of crop material of an agricultural harvester (2), that issues from a transloading apparatus (5), according to one or more of the preceding claims **characterised in that** the impingement point (12) of the stream of crop material (15) on the transport apparatus (6) is defined by a target point vector (Z).

5. A transloading assistance system for controlling the stream of crop material of an agricultural harvester (2), that issues from a transloading apparatus (5), according to claim 4 **characterised in that** the target point vector (Z) is produced by vectorial addition of a vertical vector (A), a transloading apparatus vector (B) and a crop material stream vector (C).

6. A transloading assistance system for controlling the stream of crop material of an agricultural harvester (2), that issues from a transloading apparatus (5), according to claim 4 or claim 5 **characterised in that** the target point vector (Z) is produced by vectorial addition of a relative position vector (D) and a loading point vector (E).

7. A transloading assistance system for controlling the stream of crop material of an agricultural harvester (2), that issues from a transloading apparatus (5), according to one or more of the preceding claims **characterised in that** the impingement point (12) of the crop material (4) on the transport apparatus (6) is guided along a defined geometry.

8. A transloading assistance system for controlling the stream of crop material of an agricultural harvester (2), that issues from a transloading apparatus (5), according to one or more of the preceding claims **characterised in that** the impingement point (12) of the crop material (4) is arranged within a virtual grid (22).

9. A transloading assistance system for controlling the stream of crop material of an agricultural harvester (2), that issues from a transloading apparatus (5), according to claim 8 **characterised in that** the position and/or size of the virtual grid (22) is changeable.

10. A transloading assistance system for controlling the stream of crop material of an agricultural harvester (2), that issues from a transloading apparatus (5), according to claims 8 and 9 **characterised in that** the virtual grid (22) is subdivided into a plurality of virtual fields (23).

11. A transloading assistance system for controlling the stream of crop material of an agricultural harvester (2), that issues from a transloading apparatus (5), according to claim 10 **characterised in that** the size of the virtual fields (23) is changeable.

12. A transloading assistance system for controlling the stream of crop material of an agricultural harvester (2), that issues from a transloading apparatus (5), according to one of claims 10 or 11 **characterised in that** the virtual grids (22) and the virtual fields (23) are controllable.

13. A transloading assistance system for controlling the stream of crop material of an agricultural harvester (2), that issues from a transloading apparatus (5), according to one of claims 10 to 12 **characterised in that** control of the impingement point (12) within the virtual grid (22) and the virtual fields (23) is effected by key pressing.

14. A transloading assistance system for controlling the stream of crop material of an agricultural harvester (2), that issues from a transloading apparatus (5), according to one of claims 8 to 13 **characterised in that** the transloading apparatus (5) pivots in dependence on the position and/or the size of the virtual grid (22).

15. A transloading assistance system for controlling the stream of crop material of an agricultural harvester (2), that issues from a transloading apparatus (5), according to claim 14 **characterised in that** the pivot range of the transloading apparatus (5) is determined by the virtual fields (23).

16. A transloading assistance system for controlling the stream of crop material of an agricultural harvester (2), that issues from a transloading apparatus (5), according to claim 4 **characterised in that** the impingement point (12) is adjustable.

17. A transloading assistance system for controlling the stream of crop material of an agricultural harvester (2), that issues from a transloading apparatus (5), according to claim 4 **characterised in that** the target point vector (Z) is variable.

18. A transloading assistance system for controlling the stream of crop material of an agricultural harvester (2), that issues from a transloading apparatus (5), according to one or more of the preceding claims **characterised in that** the impingement point (12) is on a straight line or on a curved path.

19. A transloading assistance system for controlling the stream of crop material of an agricultural harvester (2), that issues from a transloading apparatus (5), according to claim 18 **characterised in that** the transport apparatus (8) organises the displacement of the impingement point (12).

20. A transloading assistance system for controlling the stream of crop material of an agricultural harvester (2), that issues from a transloading apparatus (5), according to one or more of the preceding claims **characterised in that** there is provided a driver guidance system which displays the relative position of the agricultural harvester (2) relative to the transport apparatus (6).

21. A transloading assistance system for controlling the stream of crop material of an agricultural harvester (2), that issues from a transloading apparatus (5), according to one or more of the preceding claims **characterised in that** the transloading apparatus (5) pivots automatically or manually.

22. A transloading assistance system for controlling the stream of crop material of an agricultural harvester (2), that issues from a transloading apparatus (5), according to one or more of the preceding claims **characterised in that** the transloading assistance system receives the signals for determining the relative position of the agricultural harvester (2) relative to the transport apparatus (6) by a GPS system and receives the signals for determining the crop material discharge stream control by the position of the transloading apparatus (5) and the transloading flap (11) and processes same and displays same to the driver of the agricultural harvester (1) in a driver guidance system.

## Revendications

1. Système d'assistance au transfert pour la commande du jet de produit de récolte (15) d'une machine agricole de récolte (2) sortant d'un dispositif de transfert (5), un volet de transfert (11) étant associé au dispositif de transfert (5) à une extrémité, et le produit de récolte (4) étant transféré à un dispositif de transport (6), le système d'assistance au transfert comprenant une détermination de position relative, une commande du jet de sortie du produit de récolte et un système de guidage du conducteur, **caractérisé en ce qu'**un point d'impact du jet de produit de récolte (15) au niveau du dispositif de transport (6) est défini par la position du dispositif de transfert (5) et par la position du volet de transfert (11), la position du dispositif de transfert (5) et la position du volet de transfert (11) étant définies dans un modèle mathématique au moyen de vecteurs (A, B, C, D, E).

2. Système d'assistance au transfert pour la commande du jet de produit de récolte d'une machine agricole de récolte (2) sortant d'un dispositif de transfert (5) selon la revendication 1, **caractérisé en ce que** la détermination de position relative a lieu entre la machine agricole de récolte (2) et au moins un dispositif de transport (6).

3. Système d'assistance au transfert pour la commande du jet de produit de récolte d'une machine agricole de récolte (2) sortant d'un dispositif de transfert (5) selon l'une ou plusieurs des revendications précédentes, **caractérisé en ce que** la commande de sortie du produit de récolte comprend la commande mutuellement adaptée de la position du dispositif de transfert (5) et de la position du volet de transfert (11).

4. Système d'assistance au transfert pour la commande du jet de produit de récolte d'une machine agricole de récolte (2) sortant d'un dispositif de transfert (5) selon l'une ou plusieurs des revendications précédentes, **caractérisé en ce que** le point d'impact (12) du jet de produit de récolte (15) sur le dispositif de transport (6) est défini par un vecteur de point cible (Z).

5. Système d'assistance au transfert pour la commande du jet de produit de récolte d'une machine agricole de récolte (2) sortant d'un dispositif de transfert (5) selon la revendication 4, **caractérisé en ce que** le vecteur de point cible (Z) est obtenu par addition vectorielle d'un vecteur vertical (A), d'un vecteur de dispositif de transfert (B) et d'un vecteur de jet de produit de récolte (C).

6. Système d'assistance au transfert pour la commande du jet de produit de récolte d'une machine agricole de récolte (2) sortant d'un dispositif de transfert (5) selon la revendication 4 ou 5, **caractérisé en ce que** le vecteur de point cible (Z) est obtenu par addition vectorielle d'un vecteur de position relative (D) et d'un vecteur de point de chargement (E).

7. Système d'assistance au transfert pour la commande du jet de produit de récolte d'une machine agricole de récolte (2) sortant d'un dispositif de transfert (5) selon l'une ou plusieurs des revendications précédentes, **caractérisé en ce que** le point d'impact (12) du produit de récolte (4) sur le dispositif de transport (6) est guidé le long d'une géométrie définie.

8. Système d'assistance au transfert pour la commande du jet de produit de récolte d'une machine agricole de récolte (2) sortant d'un dispositif de transfert (5) selon l'une ou plusieurs des revendications précédentes, **caractérisé en ce que** le point d'impact (12) du produit de récolte (4) est disposé à l'intérieur d'une trame virtuelle (22).

9. Système d'assistance au transfert pour la commande du jet de produit de récolte d'une machine agricole de récolte (2) sortant d'un dispositif de transfert (5) selon la revendication 8, **caractérisé en ce que** la position et/ou la taille de la trame virtuelle (22) sont modifiables.

10. Système d'assistance au transfert pour la commande du jet de produit de récolte d'une machine agricole de récolte (2) sortant d'un dispositif de transfert (5) selon les revendications 8 et 9, **caractérisé en ce que** la trame virtuelle (22) est divisée en plusieurs cases virtuelles (23).

11. Système d'assistance au transfert pour la commande du jet de produit de récolte d'une machine agricole de récolte (2) sortant d'un dispositif de transfert (5) selon la revendication 10, **caractérisé en ce que** la taille des cases virtuelles (23) est modifiable.

12. Système d'assistance au transfert pour la commande du jet de produit de récolte d'une machine agricole de récolte (2) sortant d'un dispositif de transfert (5) selon l'une des revendications 10 ou 11, **caractérisé en ce que** les trames virtuelles (22) et les cases virtuelles (23) peuvent être parcourues.

13. Système d'assistance au transfert pour la commande du jet de produit de récolte d'une machine agricole de récolte (2) sortant d'un dispositif de transfert (5) selon l'une des revendications 10 à 12, **caractérisé en ce que** le déplacement du point d'impact (12) à l'intérieur de la trame virtuelle (22) et des cases virtuelles (22) s'effectue en appuyant sur des touches.

14. Système d'assistance au transfert pour la commande du jet de produit de récolte d'une machine agricole de récolte (2) sortant d'un dispositif de transfert (5) selon l'une des revendications 8 à 13, **caractérisé en ce que** le dispositif de transfert (5) est orienté en fonction de la position et/ou de la taille de la trame virtuelle (22).

15. Système d'assistance au transfert pour la commande du jet de produit de récolte d'une machine agricole de récolte (2) sortant d'un dispositif de transfert (5) selon la revendication 14, **caractérisé en ce que** la plage de pivotement du dispositif de transfert (5) est déterminée par les cases virtuelles (23).

16. Système d'assistance au transfert pour la commande du jet de produit de récolte d'une machine agricole de récolte (2) sortant d'un dispositif de transfert (5) selon la revendication 4, **caractérisé en ce que** le point d'impact (12) est réglable.

17. Système d'assistance au transfert pour la commande du jet de produit de récolte d'une machine agricole de récolte (2) sortant d'un dispositif de transfert (5) selon la revendication 4, **caractérisé en ce que** le vecteur de point cible (Z) est variable.

18. Système d'assistance au transfert pour la commande du jet de produit de récolte d'une machine agricole de récolte (2) sortant d'un dispositif de transfert (5) selon l'une ou plusieurs des revendications précédentes, **caractérisé en ce que** le point d'impact (12) se situe sur une droite ou sur une trajectoire courbe.

19. Système d'assistance au transfert pour la commande du jet de produit de récolte d'une machine agricole de récolte (2) sortant d'un dispositif de transfert (5) selon la revendication 18, **caractérisé en ce que** le dispositif de transport (6) organise le déplacement du point d'impact (12).

20. Système d'assistance au transfert pour la commande du jet de produit de récolte d'une machine agricole de récolte (2) sortant d'un dispositif de transfert (5) selon l'une ou plusieurs des revendications précédentes, **caractérisé en ce qu'**il est prévu un système de guidage du conducteur, lequel affiche la position relative de la machine agricole de récolte (2) par rapport au dispositif de transport (6).

21. Système d'assistance au transfert pour la commande du jet de produit de récolte d'une machine agricole de récolte (2) sortant d'un dispositif de transfert (5) selon l'une ou plusieurs des revendications précédentes, **caractérisé en ce que** le dispositif de transfert (5) est orienté automatiquement ou manuellement.

22. Système d'assistance au transfert pour la commande du jet de produit de récolte d'une machine agricole de récolte (2) sortant d'un dispositif de transfert (5) selon l'une ou plusieurs des revendications précédentes, **caractérisé en ce que** le système d'assistance au transfert reçoit, traite et affiche pour le conducteur de la machine agricole de récolte (1), dans un système de guidage du conducteur, les signaux servant à déterminer la position relative de la machine agricole de récolte (2) par rapport au dispositif de transport (6) par un système GPS et les signaux servant à déterminer la commande du jet due sortie du produit de récolte par la position du dispositif de transfert (5) et du volet de transfert (11).
